**Europäisches Patentamt**

**European Patent Office**

**Office européen des brevets**

(19)

(11) Veröffentlichungsnummer : **0 342 480 B1**

# (12) EUROPÄISCHE PATENTSCHRIFT

(45) Veröffentlichungstag der Patentschrift :
26.08.92 Patentblatt 92/35

(51) Int. Cl.⁵ : **B32B 5/32,** B32B 27/42,
B32B 5/20

(21) Anmeldenummer : **89108306.5**

(22) Anmeldetag : **09.05.89**

(54) Verbundschaumstoff und Verfahren zu seiner Herstellung.

(30) Priorität : **18.05.88 DE 3816858**

(43) Veröffentlichungstag der Anmeldung :
**23.11.89 Patentblatt 89/47**

(45) Bekanntmachung des Hinweises auf die
Patenterteilung :
**26.08.92 Patentblatt 92/35**

(84) Benannte Vertragsstaaten :
**BE DE FR GB NL SE**

(56) Entgegenhaltungen :
**EP-A- 0 017 672**

(73) Patentinhaber : **BASF Aktiengesellschaft
Carl-Bosch-Strasse 38
W-6700 Ludwigshafen (DE)**

(72) Erfinder : **Graalmann, Onno, Dr.
Lorscher Weg 16
W-6915 Dossenheim (DE)**
Erfinder : **Kreibiehl, Guenter
Sperlinggasse 8
W-6700 Ludwigshafen (DE)**
Erfinder : **Turznik, Gerhard, Dr.
Budapester Strasse 45
W-6700 Ludwigshafen (DE)**
Erfinder : **Weber, Heinz, Dr.
Am Wehrhaus 26
W-6718 Gruenstadt (DE)**

EP 0 342 480 B1

Jouve, 18, rue Saint-Denis, 75001 PARIS

**Beschreibung**

Die Erfindung betrifft Verbundschaumstoffe aus einem elastischen Melaminharz-Schaumstoff und einem elastischen Polyimid-Schaumstoff.

Aus den europäischen Patentschriften 17 671 und 17 672 sind elastische Schaumstoffe auf Basis eines Melamin-Formaldehyd-Kondensationsproduktes bekannt, die sich auszeichnen durch niedrige Dichte, gutes Wärme- und Schalldämmvermögen und günstige mechanische Eigenschaften. Sie sind normal- bis schwerentflammbar nach DIN 4102. Derartige Melaminharz-Schaumstoffe weisen jedoch einen geringen Feuerwiderstand und Zersetzungstemperaturen deutlich unter 300°C auf.

Der elastische Melaminharz-Schaumstoff der europäischen Patentschrift 17 672 hat eine Dichte zwischen 4 und 80 g/l und basiert auf einem Melaminharz, welches mindestens 50 Gew.% Melamin- und Formaldehydeinheiten einkondensiert enthält. Der Schaumstoff kann ein- oder beidseitig mit einer geschäumten Kunststoff-Folie versehen sein.

Aus den US-Patentschriften 3.966.652; 4,296.208; 4.426.463; 4.599.365 und 4.604.409 ist die Herstellung von elastischen Polyimidschaumstoffen bekannt, die sich durch günstige mechanische Eigenschaften und eine hervorragende Flammbeständigkeit auszeichnen. Nachteilig ist der hohe Preis der erforderlichen Ausgangsstoffe.

Aufgabe der Erfindung war es, elastische Schaumstoffe herzustellen, die gegenüber Melaminharzschaumstoffen ein verbessertes Brandverhalten zeigen und die kostengünstiger sind als Polyimidschaumstoffe.

Überraschenderweise wurde nun gefunden, daß durch Beschichtung der Oberfläche von elastischen Melaminharzschaumstoffen mit einem elastischen Polyimidschaumstoff kostengünstig elastische Verbundschaumstoffe hergestellt werden können, die eine hervorragende Flammbeständigkeit, aufweisen.

Geeignet sind die aus den EP-B 17671 und 17672 bekannten elastischen offenzelligen Schaumstoffe.

Gegenstand der Erfindung ist somit ein Verbundschaumstoff, bestehend aus mindestens einer Schicht eines elastischen Melaminharz-Schaumstoffs, wobei das Melaminharz mindestens 50 Gew.% Melamin- und Formaldehydeinheiten einkondensiert enthält, und mindestens einer weiteren Schaumstoffschicht, wobei der Verbundschaumstoff aus

a) mindestens einer Schicht eines elastischen Melaminharz-Schaumstoffs der Dichte 4 bis 25 g/l und

b) mindestens einer Schicht eines elastischen Polyimid-Schaumstoffs der Dichte 8 bis 40 g/l

besteht und mindestens eine Polyimid-Schaumstoff-Außenschicht aufweist.

Gegenstand der Erfindung ist ferner ein Verfahren zur Herstellung eines derartigen Verbundschaumstoffs, dadurch gekennzeichnet, daß man auf mindestens eine Seite einer Platte eines elastischen Melaminharz-Schaumstoffs ein treibmittelhaltiges Polyimidvorkondensat aufbringt, gegebenenfalls mehrere derart beschichtete Platten übereinanderlegt und das Vorkondensat unter Erhitzen aufschäumt und aushärtet.

Die erfindungsgemäßen Verbundschaumstoffe enthalten mindestens eine Schicht eines elastischen Melaminharz-Schaumstoffs auf Basis eines Melamin/Formaldehyd-Kondensationsproduktes, welches mindestens 50 Gew.%, vorzugsweise mindestens 80 Gew.% Melamin und Formaldehydeinheiten einkondensiert enthält und bis zu 50, vorzugsweise bis zu 20 Gew.%, andere amino-, amid-, oder carboxylgruppenhaltige Duroplastbildner einerseits und Aldehyde andererseits einkondensiert enthalten kann. Sie sind durch folgende Eigenschaften gekennzeichnet:

a) die Rohdichte nach DIN 53 420 liegt zwischen 4 und 25, vorzugsweise zwischen 8 und 15, und insbesondere zwischen 9 und 12 [kg/m³];

b) die Wärmeleitzahl nach DIN 52612 ist kleiner als 0,06, vorzugsweise kleiner als 0,05 und insbesondere kleiner als 0,04 [W · m⁻¹ · °K⁻¹];

c) die Stauchhärte nach DIN 53 577 bei 60 % Stauchung, dividiert durch die Rohdichte liegt unter 0,3, vorzugsweise unter 0,2 [N · cm⁻²/g · 1⁻¹], wobei bei der Bestimmung der Stauchhärte bei 60 % Stauchung eine Wiedererholung des Schaumstoffs auf mindestens 70 %, vorzugsweise mindestens 80 %, und insbesondere mindestens 90 % seiner ursprünglichen Abmessung erfolgen muß;

d) Die Druckspannung bei 10 % Stauchung nach DIN 53 421 liegt zwischen 0,005 - 0,05 N/mm².

e) sie sind nach DIN 4102 mindestens normalentflammbar, vorzugsweise schwerentflammbar;

f) die Zugfestigkeit nach DIN 53 571 beträgt vorzugsweise mindestens 0,07, insbesondere mindestens 0,1 N · mm⁻².

Die Dicke der Schicht liegt im allgemeinen zwischen 10 und 120 mm, vorzugsweise zwischen 20 und 100 mm, und insbesondere zwischen 25 und 60 mm.

Die erfindungsgemäßen Verbundschaumstoffe enthalten ferner mindestens eine Schicht eines elastischen Polyimid-Schaumstoffs der Dichte 8 bis 40 g/l.

Geeignet sind die aus den US-Patentschriften 4 966 652, 4 296 208, 4 426 463, 4 599 365 und 4 604 409 bekannten elastischen Polyimid-Schaumstoffe auf Basis von Kondensationsprodukten aus aromatischen Tetracarbonsäuren bzw. deren Anhydriden und aromatischen und/oder heteroaromatischen Diaminen. Als Tetracarbonsäuren finden u.a. Verwendung Pyromellithsäure 3,3′,4,4′-Diphenyltetracarbonsäure und 3,3′,4,4′-Benzophenontetracarbonsäure. Geeignete Diamine sind 3,3′- bzw. 4,4′-Diaminodiphenylether, para- und meta-Phenylendiamin, 2,6- und 2,4-Diaminotoluol, Diaminodiphenylmethan und 2,6-Diaminopyridin. Vorzugsweise werden Polyimide auf Basis von 3,3′,4,4′-Benzophenontetracarbonsäureanhydrid und 4,4′-Diaminodiphenylmethan und 2,6-Diaminopyridin verwendet. Das 2,6-Diaminopyridin kann auch ganz oder teilweise durch Melamin ersetzt werden.

Die verwendeten Polyimidschaumstoffe haben im allgemeinen eine Wärmeleitzahl nach DIN 52 612 von kleiner als 0,04 W·m$^{-1}$·°K$^{-1}$, eine Stauchhärte nach DIN 53 577 bei 40 % Stauchung von < 10 kPa und eine Zugfestigkeit von 50-150 kPa.

Die Polyimid-Schaumstoffschicht weist im allgemeinen eine Dicke von 3 bis 80 mm, vorzugsweise 5 bis 30 mm, insbesondere 10 bis 20 mm auf.

Der Verbundschaumstoff besitzt mindestens eine Polyimid-Schaumstoff-Außenschicht. Der Melaminharz-Schaumstoff kann auch beidseitig mit dem Polyimidschaumstoff beschichtet sein und gegebenenfalls weitere Innenschichten aus Polyimidschaumstoff enthalten.

Die Gesamtdicke des Verbundschaumstoffs liegt im allgemeinen zwischen 13 und 200, insbesondere 25 bis 130 mm. Er liegt vorzugsweise in Form von Bahnen und Platten vor, kann jedoch auch beliebige andere Formen aufweisen je nach dem Verwendungszweck.

Die Herstellung der Verbundschaumstoffe kann beispielsweise durch Verkleben der Einzelschichten erfolgen.

Vorteilhaft geht man von einem elastischen Melaminharz-Schaumstoff aus und bringt auf seine Oberfläche ein treibmittelhatiges Polyimidvorkondensat auf, das anschließend durch Erhitzen aufgeschäumt und ausgehärtet wird.

Eine Erhöhung des Widerstandes gegenüber mechanischer, thermischer und Flammen-Belastung läßt sich durch eine Zwischenschicht aus Glasgewebe erreichen. Die Maschenweite des Glasgewebes liegt zwischen 1 x 1 und 3,5 x 3,5 mm.

Als Polyimidvorkondensat wird das Reaktionsprodukt aus der aromatischen Tetracarbonsäure, einem niederen Alkohol wie Methanol oder Ethanol und dem aromatischen Diamin verwendet. Zu seiner Herstellung setzt man zunächst die aromatische Tetracarbonsäure bzw. ihr Anhydrid mit Alkohol bei Temperaturen zwischen etwa 50 bis 100°C bis zur Bildung des sauren Halbesters um und vermischt den Halbester anschließend mit dem Diamin. Tetracarbonsäure und Diamin werden in etwa stöchiometrischen Mengen verwendet, d.h. pro 2 Carboxylgruppen bzw. pro Carbonsäureanhydridgruppe 1 Aminogruppe. Pro Mol Tetracarbonsäure(anhydrid) benutzt man etwa 3 bis 10 Mol Alkohol. Zweckmäßig fügt man dem Vorkondensat eine geringe Menge einer oberflächenaktiven Substanz, z.B. ein Fluortensid zu.

Der chemisch gebundene Alkohol des Vorkondensats wirkt gleichzeitig als Treibmittel. Das Vorkondensat kann beispielsweise mittels eines Sprühtrockners in ein pulverförmiges Produkt übergeführt werden. Das Vorkondensat kann auch direkt mit üblichen Spritzwerkzeugen oder anderen Auftragswerkzeugen auf dem Melaminharz-Schaumstoff aufgetragen werden. Der Schaumstoff kann auch mit dem Vorkondensatpulver gleichmäßig beschichtet werden. Beim Erhitzen, beispielsweise mittels Infrarotstrahlung, Mikrowellenstrahlung oder in Heißluftöfen, schäumt das Vorkondensat auf und verbindet sich mit dem Melaminharz-Schaumstoff. Man erhitzt im allgemeinen auf Temperaturen von 250 bis 300°C solange, bis der Polyimidschaumstoff ausgehärtet ist.

Beispiele

Beispiel 1

Ein Mol 3,3′,4,4′-Benzophenontetracarbonsäuredianhydrid wird mit der siebenfachen molaren Menge an Ethanol zum sauren Ester (Halbester) umgesetzt. Nach Zugabe des Anhydrids in den Alkohol wird für ca. eine Stunde knapp unter dem Siedepunkt des Alkohols gerührt, danach auf 45°C abgekühlt und ein Gemenge aus 0,3 Mol 2,6-Diaminopyridin/0,7 Mol 4,4′-Diaminodiphenylmethan zugegeben. Diese Mischung wird für fünf Minuten auf 50 bis 65°C gehalten und danach im Eisbad auf Raumtemperatur abgekühlt. Zu der erhaltenen Lösung gibt man unter Rühren 0,3 % eines Fluortensids (Zonyl® FSC der E.I. Du PONT DE NEMOURS & Co.).

Das so gewonnene Harz wird mit dem o.a. Alkohol auf eine Viskosität von ca. 170 mPas eingestellt, was einem Feststoffgehalt von etwa 60 % entspricht. Die erhaltene Lösung wird daraufhin mit einem konventionellen Sprühtrockner der Fa. Büchi (Mini Spray Dryer 190) sprühgetrocknet. Das auf diese Weise hergestellte Pulver mit einer Korngröße von < 200 Micrometer und einer Restfeuchte von ca. 20 % wird auf 50 mm dicke Platten eines elastischen Melaminharz-Schaumstoffs der Dichte 11 g/l (BASOTECT® der BASF Aktiengesellschaft) in einer Menge von 220 g/m² durch Abstrich gleichmäßig aufgetragen und mit Hilfe eines üblichen Laborheißluftofens bei 270°C verschäumt und gehärtet. Man erhält einen weitgehend offenzelligen, elastischen Verbundschaum mit einer Dichte von 20 g/l. Die Schichtdicke des Polyimidschaumes beträgt 20 - 25 mm, seine Dichte beträgt 40 g/l.

Die Feuerwiderstandskraft des Verbundes getestet mit einem Erdgasdruckluftbrenner (ca. 1150°C, 15 l Gas/h, 45 l Luft/h) beträgt 10 Minuten und liegt damit deutlich über der des Trägermaterials. Die notwendige Kraft, den Verbund zu trennen, liegt um 2,5 N/cm.

Beispiel 2

Die Herstellung des Harzes und des Pulvers wird wie in Beispiel 1 geschildert vorgenommen. Der anschließende Auftrag erfolgt kontinuierlich über eine Schüttelrinne, die nachgeschaltete Schäumung und Härtung wird mit Hilfe von IR-Strahlern einer Wellenlänge von 1,9 - 8 Micrometern und einer Leistung von 400 W pro Strahler, welche in einen Rechteckkanal eingebaut sind, vorgenommen. Die Dicke der Polyimidschicht wird auf 15 mm eingestellt, die Dichte auf 30 g/l. Der Schallabsorbtionsgrad des Verbundes beträgt bei 1000 Hz 50 %, die Druckspannung bei 10 % Stauchung 0,01 N/mm².

Beispiel 3

Das Harz wird entsprechend Beispiel 1 dargestellt und auf ca. 150 mPas verdünnt. Die so erhaltene Harzlösung wird mit einer konventionellen Druckluftsprühpistole auf BASOTECT® aufgebracht. Das hergestellte Werkstück wird im Umlufttrockenschrank bei 200°C geschäumt und anschließend gehärtet.

Die Eigenschaften des Verbundschaumstoffs entsprechen denen aus Beispiel 1 und 2 je nach eingestellter Stärke der Beschichtung.

Beispiel 4

Die Pulverherstellung erfolgt analog dem Beispiel 1. Auf den Melaminschaum wird jedoch ein Glasgewebe mit einem Flächengewicht von 200 g/l aufgelegt und anschließend mit dem Polyimidharz-Pulver gleichmäßig beschichtet. Danach wird geschäumt und gehärtet. Der so erhaltene verstärkte Verbundschaum zeigt größere Festigkeit bei unterschiedlichen Belastungen. So ist insbesondere die Feuerwiderstandsdauer (s. Beispiel 1) ≧ 14 Minuten.

**Patentansprüche**

1. Verbundschaumstoff, bestehend aus mindestens einer Schicht eines elastischen Melaminharz-Schaumstoffs, wobei das Melaminharz mindestens 50 Gew.% Melamin- und Formaldehydeinheiten einkondensiert enthält, und mindestens einer weiteren Schaumstoffschicht, dadurch gekennzeichnet, daß der Verbundschaumstoff aus

a) mindestens einer Schicht eines elastischen Melaminharz-Schaumstaffs der Dichte 8 bis 25 g/l und
b) mindestens einer Schicht eines elastischen Polyimid-Schaumstoffs der Dichte 8 bis 40 g/l

besteht und mindestens eine Polyimid-Schaumstoff-Außenschicht aufweist.

2. Verfahren zur Herstellung eines Verbundschaumstoffs gemäß Anspruch 1, dadurch gekennzeichnet, daß man auf mindestens eine Seite einer Platte eines elastischen Melaminharz-Schaumstoffs ein treibmittelhaltiges Polyimidvarkondensat aufbringt, gegebenenfalls mehrere derart beschichtete Platten übereinanderlegt und das Vorkondensat unter Erhitzen aufschäumt und aushärtet.

**Claims**

1. A foam composite comprising at least one layer of a flexible melamine resin foam, the melamine resin containing at least 50% by weight of melamine and formaldehyde units as cocondensed units, and at least one further foam layers, wherein the foam composite comprises

(a) at least one layer of a flexible melamine resin foam from 8 to 25 g/l in density and
(b) at least one layer of a flexible polyimide foam from 8 to 40 g/l in density and has at least one polyimide foam outer layer.

2. A process for manufacturing a foam composite as claimed in claim 1, which comprises applying to at least one side of a sheet of a flexible melamine resin foam a polyimide precondensate which contains a blowing agent, optionally placing a plurality of thus coated sheets on top of one another, and heating to expand and cure the precondensate.

**Revendications**

1. Mousse stratifiée, qui se compose d'au moins une couche d'une mousse de résine de mélamine, élastique, où la résine de mélamine contient, au moins 50% en poids d'unités mélamine et formaldéhyde, incorporées par condensation et d'au moins une autre couche de mousse, caractérisée en ce que la mousse stratifiée se compose

a) d'au moins une couche d'une mousse de résine de mélamine, élastique, d'une masse spécifique de 8 à 25 g/l et

b) d'au moins une couche d'une mousse de polyimide, élastique, d'une masse spécifique de 8 à 40 g/l et en ce qu'elle présente au moins une couche externe de mousse de polyimide.

2. Procédé de fabrication d'une mousse stratifiée suivant la revendication 1, caractérisé en ce que l'on applique sur au moins un côté d'une plaque de mousse de résine de mélamine, élastique, un précondensat de polyimide, qui contient un agent porogène, on pose éventuellement plusieurs plaques ainsi revêtues les unes pardessus les autres et on provoque le moussage et le durcissement du précondensat sous chauffage.